# EUROPÄISCHE PATENTSCHRIFT

(11) **EP 0 341 398 B1**
(45) Veröffentlichungstag und Bekanntmachung des Hinweises auf die Patenterteilung: **16.02.1994**
(21) Anmeldenummer: 89104688.0
(22) Anmeldetag: 16.03.1989
(51) Int. Cl.: F02P 17/00, G01P 3/488

(54) **Abtastvorrichtung zur Drehzahlmessung an einer Brennkraftmaschine**
Scanning device for determining the revolution number of a combustion engine
Dispositif à balayage pour compte-tours dans un moteur à combustion

(30) Priorität: 11.05.1988 DE 3816114
(43) Veröffentlichungstag der Anmeldung: 15.11.1989
(73) Patentinhaber: Dr.Ing.h.c. F. Porsche Aktiengesellschaft, 70435 Stuttgart (DE)
(72) Erfinder: Batzill, Manfred, Dipl.-Ing., D-7303 Neuhausen (DE)

(56) Entgegenhaltungen:
- DE-A- 2 310 977
- DE-A- 2 403 854
- DE-A- 2 445 329
- DE-A- 2 604 599
- DE-A- 3 702 474
- FR-A- 2 375 599
- FR-A- 2 377 636
- US-A- 4 002 937

## Beschreibung

Die Erfindung betrifft eine Abtastvorrichtung, nach dem Oberbegriff des Anspruchs 1.

Eine Vorrichtung, die mit Hilfe eines gegenüber einem feststehenden Sensor rotierenden Teiles die Kurbelwellendrehzahl einer Brennkraftmaschine aufnimmt, ist aus DE-OS 24 24 991 bekannt.
Dabei wird außerhalb des Kurbelgehäuses eine Abtastscheibe auf die nach vorne aus dem Motor herausgeführte Kurbelwelle aufgesteckt.

Mit der genannten Vorrichtung ist es möglich, die Kurbelwellendrehzahl durch Aufstecken der Scheibe am vorderen oder hinteren Ende der Kurbelwelle zu bestimmen. Das Anbringen der Scheibe an beliebiger Stelle der Kurbelwelle ist aufgrund der Kurbelwellenkröpfung nicht möglich.

Der Erfindung liegt die Aufgabe zugrunde, die Kurbelwellendrehzahl an beliebiger Stelle der Kurbelwelle durch eine leicht montier- bzw. demontierbare Vorrichtung zu messen.

Die Aufgabe wird erfindungsgemäß mit den kennzeichnenden Merkmalen des Anspruchs 1 gelöst.

Um einen solchen Abtastring an beliebiger Stelle in einfacher Weise montieren zu können, hat er in weiterer Gestaltung der Erfindung einen L-förmigen Querschnitt, ist an einem der Schenkel mit Zähnen versehen und hat an einer dem radial verlaufenden Spalt gegenüberliegenden Stelle eine Ausnehmung.

Die mit der Erfindung erzielbaren Vorteile bestehen insbesondere darin, daß der Abtastring an einer beliebigen Kurbelwange der Kurbelwelle auch nach deren Montage in das Kurbelgehäuse zu befestigen ist und daß die Montage in einfacher Weise ohne aufwendige technische Hilfsmittel erfolgen kann. Weiterhin ist der Abtastring als Stanzteil kostengünstig herstellbar.

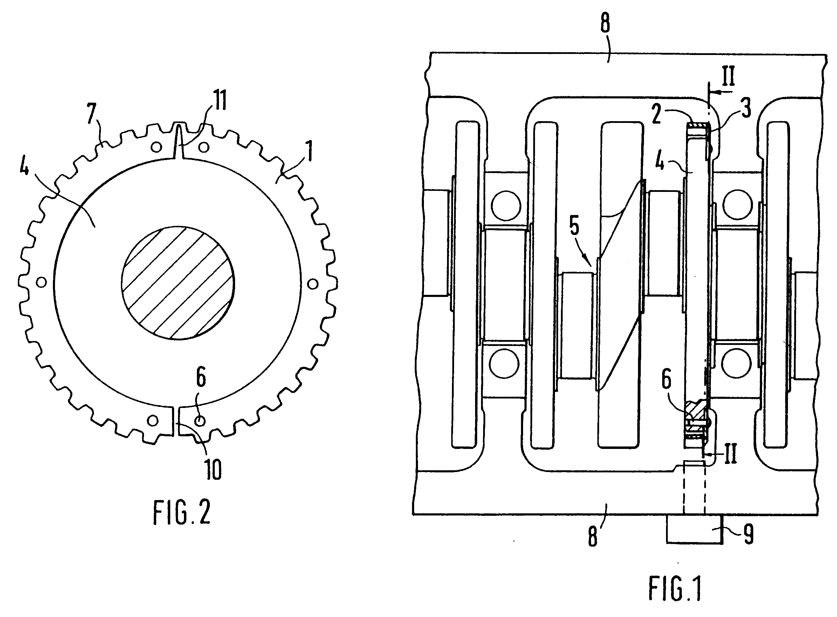

Ein Ausführungsbeispiel der Erfindung wird nachstehend anhand der Zeichnungen näher erläutert.
Es zeigt
- Fig. 1: eine Drehzahl-Abtastvorrichtung an der Kurbelwelle einer Brennkraftmaschine,
- Fig. 2: einen Schnitt entlang der Linie II-II aus Fig. 1.

Ein Abtastring **(1)** liegt mit beiden Schenkeln **(2, 3)** an einer kreisrunden, zylindrischen Kurbelwange **(4)** der Kurbelwelle **(5)** an, ist mit Stiften **(6)** an der Kurbelwange **(4)** verdrehsicher befestigt und wirkt über die auf dem Schenkel **(2)** angebrachten Zähne **(7)** und eine Zahnlücke **(7a)** mit einem im Kurbelgehäuse **(8)** angebrachten Sensor **(9)** induktiv zusammen.

Zur Montage wird der Abtastring **(1)** radial soweit aufgebogen, daß die Breite des Spaltes **(10)** mindestens dem Durchmesser der Kurbelwelle **(5)** entspricht. Die Ausnehmung **(11)** erleichtert dabei das Aufbiegen des Abtastringes **(1)** wesentlich, da lediglich die Materialstärke des Schenkels **(2)** gebogen werden muß. Der Abtastring **(1)** kann im aufgebogenen Zustand leicht über die Kurbelwange **(4)** geschoben werden und anschließend durch Zusammendrücken so mit der Kurbelwange **(4)** formschlüssig verbunden werden, daß der Schenkel **(3)** seitlich und der Schenkel **(2)** auf der Stirnseite der Kurbelwange **(4)** aufliegt.

Eine mehrfache Montage bzw. Demontage ist bei Ausführung des Abtastringes **(1)** als Stanzteil aus elastischem Blech leicht möglich.

## Patentansprüche

1. Abtastring (1) für eine Kurbelwelle (5), der Drehzahlsignale der Kubelwelle (5) liefert und mit Zähnen (7) versehen ist, die auf einen Drehzahlsensor (Sensor 9) einwirken, **dadurch gekennzeichnet**, daß der Abtastring (1) einen radialen, durchgehenden Spalt (10) besitzt, und zur Montage über ein zylindrisches Teil (4) der Kurbelwelle (5) radial aufbiegbar und nach der Montage mit dem Teil (4) formschlüssig verbindbar ist.

2. Abtastvorrichtung nach Anspruch 1, dadurch gekennzeichnet, daß der Abtastring **(1)** im Querschnitt L-förmig ausgebildet ist und mit beiden Schenkeln **(2, 3)** an der Kurbelwange **(4)** der Kurbelwelle **(5)** anliegt.

3. Abtastvorrichtung nach Anspruch 2, dadurch gekennzeichnet, daß der Abtastring **(1)** auf einem der beiden Schenkel **(2, 3)** mit senkrecht vorstehenden Zähnen **(7)** versehen ist.

4. Abtastvorrichtung nach Anspruch 3, dadurch gekennzeichnet, daß der Abtastring **(1)** als elastisches Blechteil ausgeführt ist.

5. Abtastvorrichtung nach Anspruch 4, dadurch gekennzeichnet, daß der Abtastring **(1)** mit einer dem Spalt **(10)** radial gegenüberliegenden, vom inneren bis nahe an den äußeren Rand verlaufenden, Ausnehmung **(11)** versehen ist.

6. Abtastvorrichtung nach Anspruch 3 oder 5, dadurch gekennzeichnet, daß der Abtastring **(1)** mit mindestens einem Stift **(6)** an der Kurbelwange **(4)** der Kurbelwelle **(5)** formschlüssig befestigt ist.

7. Abtastvorrichtung nach Anspruch 6, dadurch gekennzeichnet, daß der Abtastring **(1)** durch mindestens zwei, in unmittelbarer Nähe beidseitig des Spaltes **(10)** angebrachte Stifte **(6)** an der Kurbelwange **(4)** der Kurbelwelle **(5)** formschlüssig befestigt ist.

## Claims

1. A sensor ring (1) for a crankshaft (5), delivering signals of the rotational speed of the crankshaft (5) and provided with teeth (7) acting upon a speed sensor (sensor 9), **characterized in that** the sensor ring (1) has a continuous radial gap (10) and can be bent radially over a cylindrical part (4) of the crankshaft (5) for assembly and can be connected with positive locking to the part (4) after assembly.

2. A sensing device according to Claim 1, **characterized in that** the sensor ring (1) is made L-shaped in cross-section and rests with both legs (2, 3) on the web (4) of the crankshaft (5).

3. A sensing device according to Claim 2, **characterized in that** the sensor ring (1) is provided on one of the two legs (2, 3) with teeth (7) projecting at right angles.

4. A sensing device according to Claim 3, **characterized in that** the sensor ring (1) is constructed as a resilient sheet-metal part.

5. A sensing device according to Claim 4, **characterized in that** the sensor ring (1) is provided with a recess (11) situated radially opposite the gap (10) and extending from the inside to near the outer edge.

6. A sensing device according to Claim 3 or 5, **characterized in that** the sensor ring (1) is secured with positive locking to the web (4) of the crankshaft (5) by at least one pin (6).

7. A sensing device according to Claim 6, **characterized in that** the sensor ring (1) is secured with positive locking to the web (4) of the crankshaft (5) by at least two pins (6) arranged on both sides of the gap (10) in the immediate vicinity thereof.

## Revendications

1. Anneau à balayage (1) pour un vilebrequin (5), fournissant des signaux de vitesse de rotation du vilebrequin (5), et pourvu de dents (7), agissant sur un capteur de vitesse de rotation (capteur 9), caractérisé en ce que l'anneau à balayage (1) comporte un interstice radial (10) continu et est susceptible d'être fléchi radialement, pour le montage, sur une partie cylindrique (4) du vilebrequin (5) et relié avec ajustement de forme à la partie (4), après montage.

2. Dispositif à balayage selon la revendication 1, caractérisé en ce que l'anneau à balayage (1) a une section transversale en L et appuie par ses deux branches (2, 3) sur la joue de manivelle (4) du vilebrequin (5).

3. Dispositif à balayage selon la revendication 2, caractérisé en ce que l'anneau à balayage (1) est pourvu sur l'une des deux branches (2, 3) de dents (7) faisant saillie perpendiculairement.

4. Dispositif à balayage selon la revendication 3, caractérisé en ce que l'anneau à balayage (1) est réalisé sous forme d'une pièce en tôle élastique.

5. Dispositif à balayage selon la revendication 4, caractérisé en ce que l'anneau à balayage (1) est pourvu d'un évidement (11), opposé radialement à l'interstice (10), s'étendant de l'intérieur jusqu'à proximité de la bordure extérieure.

6. Dispositif à balayage selon la revendication 3 ou 5, caractérisé en ce que l'anneau à balayage (1) est fixé avec ajustement de forme sur la joue de manivelle (4) du vilebrequin (5), à l'aide d'au moins une goupille (6).

7. Dispositif à balayage selon la revendication 6, caractérisé en ce que l'anneau à balayage (1) est fixé avec ajustement de forme sur la joue de manivelle (4) du vilebrequin (5), à l'aide d'au moins deux goupilles (6) montées à proximité immédiate de l'interstice (10) et de part et d'autre de celui-ci.
